# EUROPÄISCHE PATENTSCHRIFT

(11) **EP 0 952 523 B1**
(45) Veröffentlichungstag und Bekanntmachung des Hinweises auf die Patenterteilung: **28.07.2004**
(21) Anmeldenummer: 98107284.6
(22) Anmeldetag: 22.04.1998
(51) Int. Cl.: G06F 12/06, G06F 11/20

(54) **Funktionseinheit für eine speicherprogrammierbare Steuerung mit Redundanzfunktion**
Functional unit for a programmable controller having redundancy function
Unité fonctionnelle pour une commande programmable par mémoire avec une fonction de redondance

(43) Veröffentlichungstag der Anmeldung: 27.10.1999
(73) Patentinhaber: Phoenix Contact GmbH & Co. KG, 32825 Blomberg (DE)
(72) Erfinder: Kalhoff, Johannes, Dipl.-Ing., 32825 Blomberg (DE); Esch, Rainer, Dipl.-Ing., 54587 Birgel (DE); Koch, Hans-Jürgen, Dipl.-Ing., 37696 Marienmünster (DE); Kloppenburg, Matthias, 33161 Hövelhof (DE)
(74) Vertreter: Blumbach, Kramer & Partner GbR

(56) Entgegenhaltungen:
- EP-B- 0 674 786
- GB-A- 2 202 062
- US-A- 4 188 670
- BUDZINSKI: "Geographic addressing with Multibus II" NEW ELECTRONICS., Bd. 19, Nr. 14, Juli 1986, Seiten 27-28, XP000211799 LONDON GB

## Beschreibung

Die Erfindung betrifft eine steckbare Funktionseinheit für eine speicherprogrammierbare Steuerung gemäß dem Oberbegriff des Anspruchs 1 sowie eine speicherprogrammierbare Steuerung gemäß Anspruch 8.

Aus der DE 42 39 030 A1 sowie der EP 0 674 786 B1 sind speicherprogrammierbare Steuerungen mit steckbaren Funktionseinheiten bekannt, bei welchen das Bussystem der Steuerungen einen Systembus, sowie einen Adressbus mit zugehörigen Auswahlleitungen und einen Steuerbus umfasst. Zu den steckbaren Funktionseinheiten führt jeweils eine Auswahlleitung, die mit einer der Leitungen des Adressbusses verbunden ist. Die zugeordnete CPU kann über den Steuerbus Signale ausgeben, welche die Funktionseinheiten veranlassen, der CPU auf den Auswahlleitungen, die zum Adressbus führen, zu signalisieren, daß diese in einen bestimmten Steckplatz eingesteckt sind. Um festzustellen, ob steckbare Funktionseinheiten im System verfügbar sind, erfolgt hierbei die Signalisierung über eine Sammelleitung und die Rückmeldung über genau diejenige Auswahlleitung, die jeweils genau diesem Steckplatz zugeordnet ist. Hierdurch kann zwar von der zugeordneten CPU der Steckplatz exakt erkannt werden, in welchen eine Funktionseinheit eingesteckt ist, jedoch verfügt die jeweilige Funktionseinheit nur über einen einzigen Auswahlanschluß und es kann hierdurch die herkömmliche Funktionseinheit nicht erkennen, wo diese eingesteckt ist. Dieses kann jedoch in bestimmten Fällen von großem Nachteil sein. Weist etwa eine eingesteckte Funktionseinheit einen Defekt auf, so wird hierdurch der dieser Funktionseinheit zugeordnete Bereich an Ressourcen unter Umständen völlig unbrauchbar. Dies bedeutet, daß nachgeordnete, mit der Funktionseinheit verbundene Geräte nicht mehr angesprochen werden und der von der Funktionseinheit belegte, dem Steckplatz zugeordnete Speicherbereich nicht mehr verfügbar ist. Herkömmliche Systeme erzeugen in diesem Fall, je nach deren Programmierung, eine Fehlermeldung oder unterbrechen den laufenden Betriebszustand der speicherprogrammierbaren Steuerung. Die Abarbeitung des laufenden Programms kann hierbei bis zum Ersatz der fehlerhaften Funktionseinheit bzw. deren Reparatur verzögert oder unter Umständen sogar ganz abgebrochen werden.

Der Erfindung liegt folglich die Aufgabe zugrunde, die Beschränkungen herkömmlicher speicherprogrammierbarer Systeme in Bezug auf die Signalisierung eines Belegtzustandes zu mildern und ferner eine flexiblere Verwendung der den jeweiligen Funktionseinheiten zugeordneten Ressourcen zu ermöglichen.

Diese Aufgabe wird auf höchst überraschende Weise bereits mit den Merkmalen des Anspruches 1 sowie bei einer speicherprogrammierbaren Steuerung gemäß Anspruch 8 gelöst.

Bei der Erfindung bedarf es nicht mehr der herkömmlichen Auswahlleitungen, welche an jeweils eine der steckbaren Funktionseinheit zugeordnete Adressleitung geführt werden, sondern es wird ohne Signalisierung auf der Auswahlleitung direkt auf den Adressbus zugegriffen, welcher nachfolgend auch als Peripherieauswahlbus bezeichnet wird, und es wird durch die erfindungsgemäße Funktionseinheit auf dem Adressbus lediglich irgendein Steckplatz als belegt angezeigt, in welchen keine andere aktive Funktionseinheit eingesteckt ist. Hierduch können beliebige freie Speicherplätze als besetzt bzw. belegt angezeigt werden und kann über deren Resourcen frei verfügt werden. Ist beispielsweise ein Steckplatz fehlerhaft, kann die erfindungsgemäße Funktionseinheit die Resourcen dieses Steckplatzes von einem anderen, tatsächlich von dieser belegten Steckplatz aus benutzen.

Ferner kann die erfindungsgemäße Funktioneinheit die Resourcen, d.h. die jeweils einem Steckplatz zugewiesenen Adressräume bzw. Eingabe-/Ausgabebereiche auch mehrerer freier Steckplätze für sich allein verwenden und als belegt anzeigen und hierdurch zu einem wesentlich höheren Datendurchsatz gelangen. Zu diesem Zweck ist es höchst vorteilhaft, wenn die Speichermittel der Funktionseinheit die Nummern von mehr als einem Steckplatz speichern und die Belegung dieser Steckplätze durch die Funktionseinheit auf dem Adressbus anzeigen.

Ferner kann erstmalig überhaupt die Signalisierung der Belegung der Steckplätze auf dynamische Weise von der steckbaren Funktionseinheit selbst aus vorgenommen werden. Da bei heutigen Systemen, beispielsweise mit Lichtwellenkommunikationseinrichtunger. sehr hohe Datendurchsätze auftreten können, sind bei derartigen Anwendungen mit der erfindungsgemäßen Funktionseinheit weit höhere Datenmengen übertragbar, als dies bisher überhaupt möglich war. Hierdurch kann entweder ein Vielfaches an peripheren Geräten angeschlossen werden oder können unter Umständen zusätzliche Daten für die Steuerung dieser Geräte übertragen werden.

Ferner kann bei mehreren steckbaren Funktionseinheiten, die in vorteilhafter Weise mittels eines Konfigurationskanals miteinander verbunden sind, über welchen die Belegung der Steckplätze, für welche die Funktionseinheit dem Adressbus eine Belegung anzeigt, der Belegungszustand der Steckplätze untereinander abgestimmt werden und eine dynamische Zuordnung der Steckplätze sowie deren Ressourc en vorgenommen werden.

Auf diese Weise kann ebenfalls der Ausfall einer weiteren erfindungsgemäßen Funktioneinheit erkannt und deren Funktionalität unmittelbar von einer noch intakten Einheit übernommen werden. Derartige steckbare Funktionseinheiten können extern, auf dem Fachmann gut bekannte Weise, mit entsprechenden Mehrfach-Anschlüssen zu peripheren Geräten versehen sein, so daß das Emulieren der fehlerhaften steckbaren Funktionseinheit zu keinem Funktionsausfall der peripheren Geräte führt.

In erfindungsgemäßer Weise kann ebenfalls der Ausfall einer herkömmlichen Funktionseinheit durch das Fehlen von deren Signalisierung der Steckplatzbelegung erkannt werden und auch die herkömmliche Funktionseinheit emuliert werden.

Wird in vorteilhafter Weise in der Speichereinrichtung der erfindungsgemäßen Funktioseinheit ein Soll- und ein Ist-Zustand der Belegung mit eingesteckten Funktionseinheiten hinterlegt, kann dieser mittels einer Komparatoreinrichtung verglichen und ein Steuersignal bei einem Abweichen des Istvom Soll-Zustand erzeugt werden. Da dieses Steuersignal den Ausfall der als fehlend erkannten Funktionseinheiten darstellt, kann basierend auf diesem Signal deren unmittelbare Emulation durch eine im vorhinein hierzu bestimmte erfindungsgemäße Funktionseinheit vorgenommen werden.

Ferner ist es vorteilhaft, wenn die erfindungsgemäße Funktionseinheit über eine Meldeleitung verfügt, mittels welcher das Abweichen des Ist- vom Soll-Zustand gemeldet und durch die zugeordnete CPU erkannt wird. Hierbei kann die CPU den fehlerhaften Betrieb an zugeordneten Anzeigeeinrichtungen anzeigen und es kann sogar ohne Stillstand von peripheren Baugruppen oder Geräten die defekte Funktionseinheit aus dem System entfernt und nachfolgend durch eine intakte Funktionseinheit ersetzt werden. In besonders vorteilhafter Weise wird hierbei nach Erkennen der Wiederbesetzung durch die erfindungsgemäße steckbare Funktionseinheit die Emulierung der ausgefallenen steckbaren Funktionseinheit beendet.

Folglich kann bereits eine einzige erfindungsgemäße Funktionseinheit bei entsprechendem externen Anschluß als Ausfallschutz für mehrere Funktionseinheiten zur Verfügung stehen, da der gleichzeitige Ausfall mehrerer Baugruppen höchst unwahrscheinlich ist. Somit kann bei Verwendung nur einer einzigen erfindungsgemäßen Funktionseinheit eine wesentlich höhere Betriebssicherheit der gesamte speicherprogrammierbaren Steuerung erreicht werden.

Die Erfindung wird nachfolgend unter Bezugnahme auf die beigefügten Zeichnungen anhand von bevorzugten Ausführungsformen detaillierter beschrieben.

Es zeigen:
- Fig. 1: eine schematische Darstellung der Baugruppen einer erfindungsgemäßen Funktionseinheit mit Redundanzfunktion,
- Fig. 2: das Bussystem einer herkömmlichen speicherprogrammierbaren Steuerung,
- Fig. 3: zeitliche Signalverläufe der Funktionseinheit mit Redundanzfunktion beim Betrieb in einer herkömmlichen speicherprogrammierbaren Steuerung.

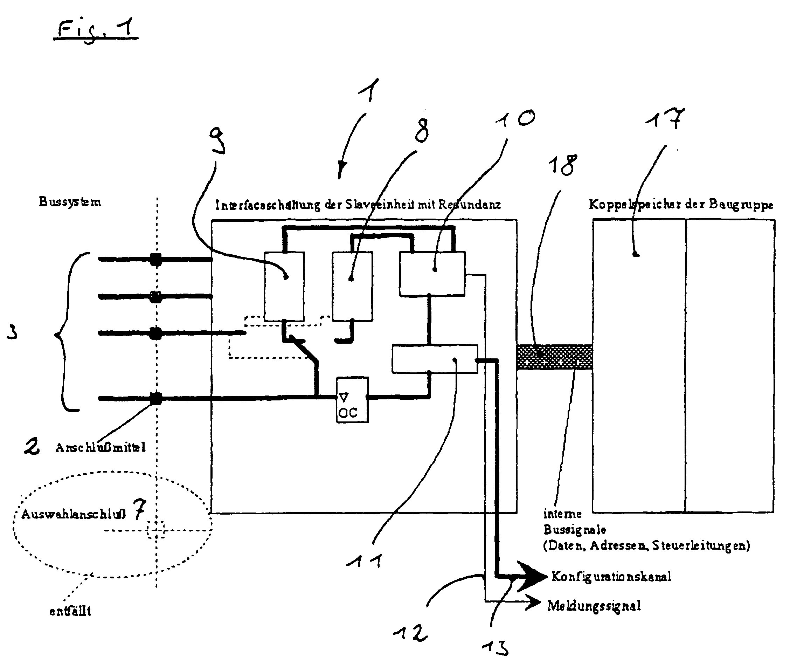

Nachfolgend wird zunächst auf Fig. 1 Bezug genommen, welche eine im ganzen mit 1 bezeichnete erfindungsgemäße Funktionseinheit darstellt.

Die Funktionseinheit 1 umfaßt als dunkle Quadrate dargestellte Anschlußmittel 2, welche eine Verbindung der Einheit 1 mit dem Bussystem 3 der speicherprogrammierbaren Steuerung herstellen.

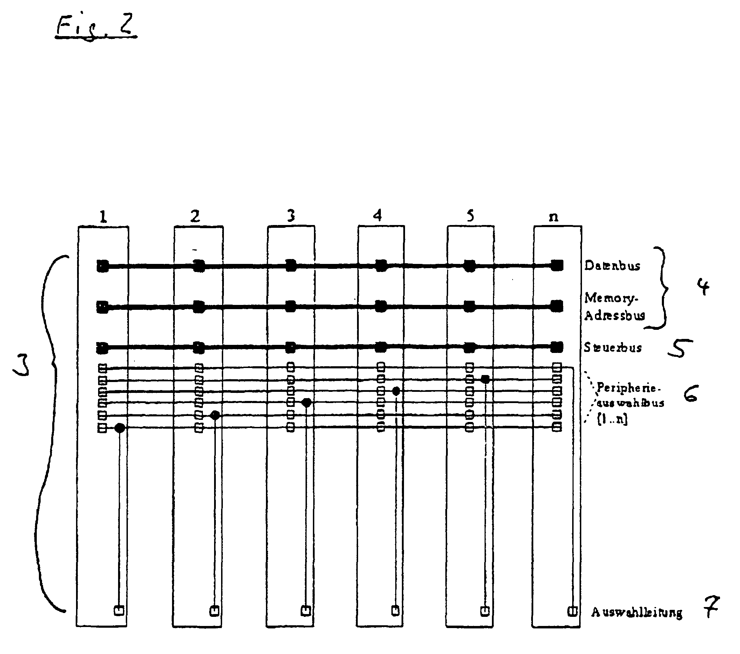

Zum besseren Verständis des Bussystems 3 der herkömmlichen speicherprogrammierbaren Steuerung wird Bezug genommen auf Fig. 2, in welcher dieses Bussystem genauer dargestellt ist. Das Bussystem 3 umfasst einen Systembus 4 mit einem Datenbus sowie einem Memory-Adressbus zum Prozess-Datenaustausch zwischen der zugeordneten CPU und den steckbaren Funktionseinheiten und umfasst einen Steuerbus 5 sowie einen auch als Peripherieauswahlbus bezeichneten Adressbus 6.

Bei der herkömmlichen speicherprogrammierbaren Steuerung führt je eine Auswahlleitung 7 zu einem vordefinierten und für alle Steckplätze gleichen Anschluß-Ort, an welchem die herkömmlichen steckbaren Funktionseinheiten deren Belegt-Signal dem Adressbus 6 signalisieren.

Bei den erfindungsgemäßen Ausführungsbeispielen werden jedoch keine Zugriffe auf die Auswahlleitungen 7 vorgenommen und sind keine zugehörigen Anschlüsse vorhanden.

Statt dessen umfaßt die Funktionseinheit 1, vorzugsweise als Register ausgebildete Speichermittel 8, 9, in welchen die Adresse eines freien Steckplatzes oder eines Steckplatzes, in welchem eine nicht-aktive Funktionseinheit eingesteckt ist, gespeichert ist.

Wird über eine Sammelleitung des Steuerbus 5 der steckbaren Funktionseinheit 1 die Aufforderung signalisiert, der CPU deren Steckplatz anzugeben, so gibt die Funktionseinheit 1 den Steckplatz, dessen Resourcen genutzt werden, direkt auf den Adressbus 6 aus. Die Adresse dieses Steckplatzes muß nicht mit dem tatsächlich eingesteckten Steckplatz übereinstimmen und es werden bei einer weiteren erfindungsgemäßen Ausführungsform von einer einzigen Funktionseinheit 1 auf entsprechende Aufforderung von der CPU die Adressen mehrerer Steckplätze auf dem Adressbus 6 ausgegeben. In letzterem Fall werden die zugehörigen Resourcen aller ausgegebenen Steckplatz-Adressen, wie beispielsweise deren nutzbare Speicherbereiche so wie Ein/Ausgabebereiche von einer einzigen erfindungsgemäßen Funktionseinheit verwendet.

Diese Adressen können der Funktionseinheit 1 über den Systembus 4 gesteuert von einer zugehörigen Benutzer-Software zugeführt oder können in alternativer Ausgestaltung mit in den Zeichnungen nicht dargestellten DIP-Schaltern an der Funktionseinheit 1 selbst eingestellt werden.

Bei einer bevorzugten Ausführungsform umfaßt das Register 9 eine Bit-mapped-Darstellung von mit aktiven anderen Funktionseinheiten besetzten Steckplätzen sowie von verbleibenden, d.h. zur Nutzung freien Steckplätzen.

Diese Bitmaske kann auch weitere Funktionseinheiten umfassen, welche bei deren Ausfall durch die erfindungsgemäße Funktionseinheit 1 emuliert werden.

Hierzu wird in dem Register 8 die tatsächliche Belegung der speicherprogrammierbaren Steuerung mit Funktionseinheiten gespeichert und durch den Komparator 10 mit dem im Register 9 abgelegten Soll-Zustand verglichen. Liegt eine Abweichung zwischen dem Soll- und Ist-Zustand vor, so kann der Komparator 10 dies einer Schnittstelleneinheit 11 mitteilen, welche auf der Leitung 12 ein Meldungssignal erzeugt, das der zugeordneten CPU die Fehlbelegung mitteilt.

Ferner wird auf einem Konfigurationskanal 13 diese Fehlbelegung zu externen oder anderen erfindungsgemäßen Funktionseinheiten übertragen. Über den Konfigurationskanal 13 kann ferner der Funktionseinheit 1 der Bit-mapped-Wert für das Register 9 auch aus anderen Datenquellen vorgegeben werden.

Der erkannte Ist-Zustand kann bei den erfindungsgemäßen Funktionseinheiten 1 direkt über den Konfigurationskanal untereinanderr kommuniziert werden oder es können erfindungsgemäße Funktionseinheiten über den Konfigurationskanal 13 eine dynamische Zuweisung von Steckplätzen untereinander vornehmen.

Soll jedoch eine herkömmliche Funktionseinheit emuliert werden, kann deren Fehlen durch den Ausfall des zugeordneten Signals auf dem Adressbus 6 durch die Abbildung dieser Signale im Register 8 und Vergleich mit dem Register 9 erkannt werden.

Werden in einem speicherprogrammierbaren System Funktionseinheiten mit abweichender Funktionalität, dies bedeutet mit voneinander abweichendem Zeitverhalten oder verschiedenem Verhalten in Bezug auf die Kommunikation mit peripheren Einheiten, verwendet, kann eine erfindungsgemäße Funktionseinheit 1 auch die Funktionalität einer abweichenden Einheit in zugeordneten, in den Figuren nicht dargestellten Speichermitteln ablegen, um im Bedarfsfall auch diese Einheiten zu emulieren.

Da verschiedene Funktionseinheiten mit einer einzigen verbindungsgemäßen Funktionseinheit emuliert, bzw. im Bedarfsfalle ersetzt werden können, ist bei einer bevorzugten Ausführungsform nur eine einzige erfindungsgemäße Funktionseinheit 1 so programmiert, daß diese den Ausfall aller anderer Funktionseinheiten im System abfängt. Hierzu sind lediglich die Peripherieanschlüsse der restlichen Einheiten mit der erfindungsgemäßen Funktionseinheit 1 zu verbinden. Über eine zugeordnete Auswahllogik, welche mittels der über den Konfigurationskanal 13 übertragenen Daten eine exklusive Verbindung zur Peripherie der ausgefallenen Funktionseinheit herstellt, kann die kurzfristige Emulierung der ausgefallenen Baugruppe sichergestellt werden.

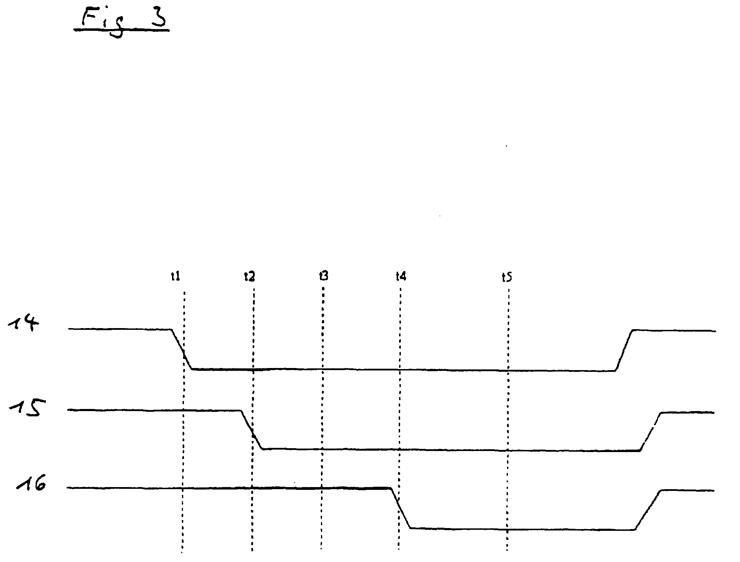

Beispielhaft wird in Fig. 3 das während des Betriebs auftretende Zeitverhalten dargestellt.

Mit Bezugszeichen 14 ist das Signal auf der Leitung des Steuerbus 5 bezeichnet, welches die Funktionseinheiten anweist, auf deren Auswahlleitungen 7 ihr Besetzt-Signal auszugeben. Bezugszeichen 15 stellt den Signalverlauf einer herkömmlichen Funktionseinheit dar, wie dieser auf einer der Auswahlleitungen 7 auftritt.

Bezugszeichen 16 stellt den Signalverlauf einer erfindungsgemäßen Funktionseinheit direkt auf dem Adressbus 6 dar.

Der zeitliche Ablauf der Signale verhält sich wie folgt. Eine zugeordnete CPU fragt die Systembestückung durch Aktivierung des Steuersignals zum Zeitpunkt t₁ ab. Hierauf signalisieren die zum Zeitpunkt t₂ vorhandenen Funktionseinheiten ihr Vorhandensein auf der zugehörigen Auswahlleitung 7.

Die erfindungsgemäße Funktionseinheit 1 kann ebenfalls zum Zeitpunkt t₂ das Besetzt-Signal der von ihr verwalteten Steckplätze direkt auf den Adressbus 6 ausgeben oder kann zunächst überprüfen, ob die Besetzt-Signale aller von ihr zu emulierenden Funktionseinheiten vorliegen und wird nach dem Einlesen des Ist-Zustands mit der Vergleichsoperation beginnen.

Nach abgeschlossenem Vergleich des Ist- mit dem Soll-Zustand wird zum Zeitpunkt t₄ das Signal aller von der erfindungsgemäßen Funktionseinheit 1 zu verwaltenden Steckplätze ausgegeben und zum Zeitpunkt t₅ von der zugeordneten CPU erkannt.

Der Zeitpunkt t₃ und t₄ wird hierbei durch entsprechend schnelle Funktionseinheiten stets so gewählt, daß dieser vor dem Zeitpunkt t₅ liegt, und auf diese Weise eine sichere Signalisierung des jeweiligen Besetzt-Zustandes erreicht. Somit wird bereits vor dem Zeitpunkt t₅ auch die Emulation ausgefallener Funktionseinheiten begonnen und ein Systemstillstand vermieden.

Es liegt ferner im Rahmen der Erfindung, die Funktionseinheit 1 mit üblichen weiteren Baugruppen, wie etwa weiteren Koppelspeichern 17 oder Bussanschlüssen 18, wie beispielsweise zu Peripheriebussen, zu versehen.

### Bezugszeichen

- 1: erfindungsgemäße Funktionseinheit
- 2: Anschlußmittel
- 3: Bussystem
- 4: Systembus
- 5: Steuerbus
- 6: Adressbus, Peripherie-Auswahlbus
- 7: Auswahlleitung
- 8: Speichermittel, Register mit Sollbesetzung
- 9: Speichermittel, Register mit Istbesetzung
- 10: Komparator
- 11: Schnittstelleneinheit
- 12: Leitung
- 13: Konfigurationskanal
- 14: Signalverlauf in der Steuerbusleitung
- 15: Signalverlauf in der Auswahlleitung einer herkömmlichen steckbaren Funktionseinheit
- 16: Signalverlauf auf dem Adressbus bei einer erfindungsgemäßen Funktionseinheit
- 17: Koppelspeicher
- 18: weiterer Busanschluß

## Patentansprüche

1. Funktionseinheit für einen Steckplatz einer mit mehreren Steckplätzen versehenen speicherprogrammierbaren Steuerung, wobei die Funktionseinheit (1) Anschlüsse für einen Systembus (4), einen Adressbus (6) und einen Steuerbus (5) umfasst und mit einer zugeordneten CPU vermittels Lese- und Schreibzugriffe kommunizeren kann und wobei die CPU über den Steuerbus (5) Signale abgeben kann, welche die Funktionseinheiten anweisen, der CPU jeweils zu signalisieren daß diese in einen Steckplatz eingesteckt sind,
**dadurch gekennzeichnet, daß**
die Funktionseinheit Speichermittel (8, 9) umfasst, welche zumindest die Nummer oder Adresse von einem Steckplatz, speichern, in welchen keine andere aktive Funktionseinheit eingesteckt ist, und Mittel (2) umfasst, die Besetzung dieses Steckplatzes, in welchen keine andere aktive Funktionseinheit eingesteckt ist, direkt auf den Adressbuss (6) auszugeben.

2. Funktionseinheit nach Anspruch 1, **dadurch gekennzeichnet, daß** die Speichermittel (8, 9) die Nummern oder Adressen von mehr als einem Steckplatz speichern, und die Belegung dieser Steckplätze durch die Funktionseinheit (1) auf dem Adressbuss (6) angezeigt wird.

3. Funktionseinheit nach Anspruch 1 oder 2, **dadurch gekennzeichnet, daß** ein Soll- und ein Ist-Zustand der Funktionseinheitenbestückung in der Speichereinrichtung (8, 9) hinterlegt ist und mittels einer Komparatoreinrichtung (10) verglichen wird, wobei ein Steuersignal (13) bei einem Abweichen des Ist- vom Sollzustand erzeugt wird, welches den Ausfall als fehlend erkannter Funktionseinheiten darstellt und deren Emulation durch eine im vorhinein definierte Funktionseinheit (1) auslöst.

4. Funktionseinheit nach Anspruch 3, ferner **gekennzeichnet durch** eine Meldeleitung (12) vermittels welcher das Abweichen des Ist- vom Sollzustand signalisiert wird.

5. Funktionseinheit nach Anspruch 3 oder 4, ferner **gekennzeichnet durch** einen Konfigurationskanal (13), über welchen die Belegung der Steckplätze, für welche die Funktionseiheit (1) dem Adressbus (13) eine Belegung anzeigt und die jeweiligen weiteren Funktionseiheiten, welche bei deren Ausfall emuliert werden, kommuniziert wird.

6. Funktionseinheit nach Anspruch 3, 4 oder 5, ferner **gekennzeichnet durch** eine Speichereinrichtung (8, 9), in welcher die Funktionalität einer weiteren im speicherprogrammierbaren System eingesteckten Funktionseinheit abgespeichert ist und beim Ausfall dieser weiteren Funktionseinheit die Funktionalität dieser Funktionseiheit emuliert und deren Steckplatz übernommen wird.

7. Funktionseinheit nach Anspruch 3, **dadurch gekennzeichnet, daß** die Funktionseinheit (1) auf vordefinierte Weise mehrere Funktionseinheiten bei deren Ausfall emuliert.

8. Speicherprogrammierbare Steurung, **gekennzeichnet durch** mindestens eine Funktionseinheit nach einem der Ansprüche von 1 bis 7.

## Claims

1. A functional unit for a plug-in point of a memory-programmable control provided with a plurality of plug-in points, the functional unit (1) comprising connections for a system bus (4), an address bus (6), and a control bus (5) and being able to communicate with an associated CPU by means of read and write accesses, and wherein the CPU can deliver via the control bus (5) signals which instruct the functional units to signal to the CPU in each case that they are plugged into a plug-in point, **characterised in that** the functional unit comprises memory means (8, 9) which store at least the number or address of a plug-in point in which no other active functional unit is plugged in, and comprises means (2) directly to output to the address bus (6) the occupation of said plug-in point into which no other active functional unit is plugged.

2. A functional unit according to claim 1, **characterised in that** the memory means (8, 9) store the numbers or addresses of more than one plug-in point and the occupation of these plug-in points is indicated by the functional unit (1) on the address bus (6).

3. A functional unit according to claim 1 or 2, **characterised in that** a set-value state and an actual-value state of the functional unit components is filed in the memory device (8, 9) and is compared by means of a comparator device (10), while a control signal (13) is generated in the event of deviation of the actual value from the set-value state, said control signal representing the breakdown of functional units recognised as deficient and triggering emulation thereof by a predefined functional unit (1).

4. A functional unit according to claim 3, also **characterised by** a message line (12) by means of which the deviation of the actual value from the set-value state is signalled.

5. A functional unit according to claim 3 or 4, also **characterised by** a configuration channel (13) over which there are communicated the occupation of the plug-in points for which the functional unit (1) indicates occupation to the address bus (13) and the respective other functional units which are emulated on breakdown thereof.

6. A functional unit according to claims 3, 4 or 5, also **characterised by** a memory device (8, 9) in which there is stored the functionality of another functional unit plugged into the memory-programmable system and in the event of breakdown of said other functional unit the functionality of said functional unit is emulated and its plug-in point taken over.

7. A functional unit according to claim 3, **characterised in that** the functional unit (1) emulates in predefined manner a plurality of functional units in the event of breakdown thereof.

8. A memory-programmable control **characterised by** at least a functional unit according to any one of claims 1 to 7.

## Revendications

1. Unité fonctionnelle pour un emplacement (un slot) d'une commande à mémoire programmable pourvue de plusieurs emplacements, l'unité fonctionnelle (1) comprenant des branchements destinés à un bus de système (4), à un bus d'adresses (6) et à un bus de commande (5) et pouvant communiquer, au moyen d'accès en lecture et en écriture, avec une unité centrale associée, l'unité centrale pouvant délivrer, par l'intermédiaire du bus de commande (5), des signaux qui ordonnent aux unités fonctionnelles de signaler chaque fois à l'unité centrale que celles-ci sont enfichées dans un emplacement,
**caractérisée en ce que** l'unité fonctionnelle comprend des moyens formant mémoire (8, 9) qui mémorisent au moins le numéro ou l'adresse d'un emplacement dans lequel aucune autre unité fonctionnelle active n'est enfichée, et comprend des moyens (2) destinés à délivrer directement sur le bus d'adresses (6) l'occupation de cet emplacement dans lequel aucune autre unité fonctionnelle active n'est enfichée.

2. Unité fonctionnelle selon la revendication 1, **caractérisée en ce que** les moyens formant mémoire (8, 9) mémorisent les numéros ou les adresses de plus d'un emplacement et **en ce que** l'occupation de ces emplacements est indiquée par l'unité fonctionnelle (1) sur le bus d'adresses (6).

3. Unité fonctionnelle selon la revendication 1 ou 2, **caractérisée en ce qu'**un état de consigne et un état réel de l'équipement d'unité fonctionnelle sont déposés dans le dispositif de mémoire (8, 9) et sont comparés au moyen d'un dispositif comparateur (10), un signal de commande (13) étant produit en cas de divergence entre l'état réel et l'état de consigne, lequel signal représente la défaillance d'unités fonctionnelles reconnues comme manquantes et déclenche l'émulation de ces dernières par une unité fonctionnelle (1) définie à l'avance.

4. Unité fonctionnelle selon la revendication 3, **caractérisée, de plus, par** un circuit de signalisation (12) au moyen duquel une divergence entre l'état réel et l'état de consigne est signalée.

5. Unité fonctionnelle selon la revendication 3 ou 4, **caractérisée, de plus, par** un canal de configuration (13) par l'intermédiaire duquel l'occupation des emplacements pour lesquels l'unité fonctionnelle (1) indique une occupation au bus d'adresses (13) et les autres unités fonctionnelles correspondantes qui sont simulées par émulation lorsqu'elles sont défaillantes sont communiquées.

6. Unité fonctionnelle selon la revendication 3, 4 ou 5, **caractérisée, de plus, par** un dispositif de mémoire (8, 9) dans lequel la fonctionnalité d'une autre unité fonctionnelle enfichée dans le système à mémoire programmable est mémorisée et dans lequel, en cas de défaillance de cette autre unité fonctionnelle, la fonctionnalité de cette unité fonctionnelle est simulée par émulation et son emplacement est repris.

7. Unité fonctionnelle selon la revendication 3, **caractérisée en ce que** l'unité fonctionnelle (1) simule par émulation, de manière prédéfinie, plusieurs unités fonctionnelles lorsque celles-ci sont défaillantes.

8. Commande à mémoire programmable, **caractérisée par** au moins une unité fonctionnelle selon l'une des revendications 1 à 7.
